# NEUE EUROPÄISCHE PATENTSCHRIFT

(11) **EP 1 719 647 B2**
(45) Veröffentlichungstag und Bekanntmachung des Hinweises auf die Entscheidung über den Einspruch: **31.08.2011**
(45) Hinweis auf die Patenterteilung: 23.04.2008
(21) Anmeldenummer: 06008345.8
(22) Anmeldetag: 21.04.2006
(51) Int. Cl.: B60H 1/00

(54) **Gehäuse**
Housing
Boîtier

(30) Priorität: 03.05.2005 DE 102005020989
(43) Veröffentlichungstag der Anmeldung: 08.11.2006
(73) Patentinhaber: Behr GmbH & Co. KG, 70469 Stuttgart (DE)
(72) Erfinder: Schweizer, Gebhard, Dipl.-Ing., 71229 Leonberg (DE); Wolf, Walter, Dipl.-Ing., 71570 Oppenweiler-Zell (DE)

(56) Entgegenhaltungen:
- EP-A- 0 549 475
- DE-A1- 19 703 461
- DE-A1- 19 741 975
- FR-A- 2 595 996

## Beschreibung

Die Erfindung betrifft ein Gehäuse, inbesondere Luftführungsgehäuse für eine Klimaanlage eines Kraftfahrzeugs gemäß dem Oberbegriff des Anspruchs 1.

Gehäuse, insbesondere Gehäuse von Klimaanlagen, sind in aller Regel starr ausgebildet. Dies führt im Rahmen der Montage, insbesondere wenn ganze Cockpit-Module einzubauen sind, auf Grund ortsfester Bauteile im Kraftfahrzeug häufig zu Problemen wegen Hinterschneidungen, so dass eine Montage nur unter deutlich erschwerten Bedingungen oder in der gewünschten Reihenfolge gar nicht möglich ist. Um dennoch ein möglichst einfaches Einbauen zu ermöglichen, sind flexible Wände oder Faltenbälge bekannt, wodurch zumindest ein Teil der Wandbereiche für die Montage relativ zu anderen, starr ausgebildeten Wandbereichen verschiebbar sind. Diese flexiblen Wände oder Faltenbälge neigen jedoch zu Schwingungen und führen so zu unerwünschten Geräuschen. Derartige Gehäuse lassen somit noch Wünsche offen.

Aus der EP 549 475 A1 ist ein Lüftergehäuse bestehend aus zwei Gehäuseelementen bekannt, wobei ein Gehäuseelement einen feststehenden ersten Teil und einen schwenkbar mit dem ersten Teil verbundenen zweiten Teil aufweist.

Es ist Aufgabe der Erfindung, ein verbessertes Gehäuse zur Verfügung zu stellen.

Diese Aufgabe wird gelöst durch ein Gehäuse mit den Merkmalen des Anspruchs 1. Vorteilhafte Ausgestaltungen sind Gegenstand der Unteransprüche.

Erfindungsgemäß ist ein Gehäuse vorgesehen , insbesondere Luftführungsgehäuse für eine Kraftfahrzeug-Klimaanlage, das mehrere Bereiche aufweist, wobei das Gehäuse einen zweiten Bereich aufweist, der gegenüber dem restlichen, ersten Bereich des Gehäuses um eine Schwenkachse verschwenkbar ausgebildet ist. Dadurch, dass der zweite Bereich gegenüber dem ersten Bereich verschwenkbar ausgebildet ist, kann der zweite Bereich entweder in den ersten Bereich einschwenken oder über denselben geschwenkt werden, so dass beide Bereiche mit einer ausreichenden Wandstärke ausgebildet sein können, wodurch unerwünschte Geräusche, die bei herkömmlichen Faltenbalg-Konstruktionen oder sonstigen flexiblen Wänden auftreten, vermieden werden können. Zudem ermöglicht die verschwenkbare Ausgestaltung eine definierte, einfache Bewegung, welche, verbunden mit dem vereinfachten Einführen des auf diese Weise bei der Montage verkleinerbaren Bauteils, in einer relativ einfachen Montage resultiert.

In oder entlang der Schwenkachse ist bevorzugt eine weichere Komponente und/oder eine Materialverjüngung, beispielsweise in Form einer Nut, und/oder eine Art Filmscharnier vorgesehen, wodurch auf einfache Weise eine Schwenkachse zur Verfügung gestellt werden kann, die gleichzeitig auch abgedichtet ist.

Die Schwenkachse kann auch - im Falle einer zweiteiligen Ausgestaltung des Gehäuses - durch zwei Zapfen verlaufen, die am ersten und/oder am zweiten Bereich ausgebildet sind, und welche in entsprechende Öffnungen eingeführt sind. In diesem Fall ist gegebenenfalls eine Abdichtung des Zwischenbereichs vorzusehen.

Der verschwenkbare, zweite Bereich des Gehäuses ist zur Vereinfachung der Montage durch eine Vorrichtung in der Montagestellung fixierbar. Die Fixierung kann auf beliebige Weise erfolgen, ggf. mit Hilfe eines nach der Montage zu entfernenden Hilfsmittels. Zur Fixierung ist eine Rast- und/oder Klemmverbindung vorgesehen, welche die gegeneinander verschwenkbaren Gehäusebereiche relativ zueinander fixiert.

Vorzugsweise ist ein Index und/oder eine Clipsverbindung vorgesehen, so dass sicherstellbar ist, dass der erste und/oder der zweite Bereich nach erfolgter Montage exakt positioniert beziehungsweise in der Betriebsstellung angeordnet ist.

In Überschneidungsbereichen des ersten und zweiten Bereichs ist bevorzugt eine Abdichtung vorgesehen. Diese kann beispielsweise durch ein Dichtelement gebildet werden, das bevorzugt bereits vor der Montage im entsprechenden Bereich vorgesehen ist.

Die Abdichtung wird bevorzugt durch eine federnde Anlage eines Bereichs an den anderen Bereich des Gehäuses und/oder durch eine oder mehrere Dichtlippen und/oder durch zwischen den Bereichen angeordnete Dichtelemente und/oder einer Nut/Feder-Verbindung gebildet. Dichtlippen sind bevorzugt im Rahmen der Herstellung des entsprechenden Gehäuse(bereich) mittels Zwei-Komponenten Spritzgießens auf besonders einfache Weise hergestellt werden.

Bevorzugt sind in der Schwenkachse Zapfen vorgesehen, wobei mindestens einer der Zapfen Klemm- oder Rastbereiche aufweist, die mit entsprechenden Bereichen in der den Zapfen aufnehmenden Öffnung zusammenwirken und die eine Fixierung des schwenkbaren Bereichs in der Montagestellung und/oder Betriebsstellung bewirken. Eine derartige Ausgestaltung benötigt besonders wenig Bauraum, ist für die zu erwartenden, relativ geringen Belastungen verbunden mit einer minimalen Anzahl von Wiederholungen geeignet und kann durch Spritzgießen relativ einfach hergestellt werden.

Der verschwenkbare Bereich des Gehäuses wird bevorzugt durch ein nach dem Gehäuse eingebautes Bauteil im Kraftfahrzeug oder gegebenenfalls in einer entsprechenden Baugruppe fixiert. Beim fixierenden Bauteil handelt es sich vorzugsweise um ein Gebläse, jedoch können auch andere Bauteile eine entsprechende Funktion übernehmen: Das fixierende Bauteil ist bevorzugt von einer anderen Seite her montierbar, und wird insbesondere nach der Montage des Gehäuses montiert, wofür jedoch eine Vorfixierung des verschwenkbaren zweiten Bereichs des Gehäuses vorgesehen ist.

Im Folgenden wird die Erfindung anhand eines Ausführungsbeispiels mit mehreren Varianten unter Bezugnahme auf die Zeichnung im Einzelnen erläutert. In der Zeichnung zeigen:
- Fig. 1: eine schematische Ansicht eines Filtergehäuses mit angedeutetem fahrzeugfesten Bauteil, wobei das Filtergehäuse schematisch in seiner Montagestellung (gestrichelte Linien im geschwenkten Bereich) und seiner Betriebsstellung (durchgezogene Linien) dargestellt ist,

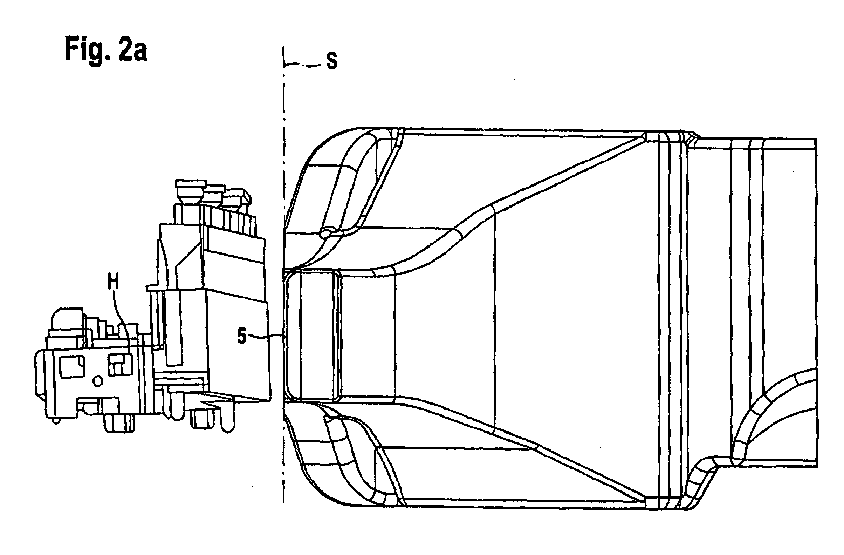

- Fig. 2a: die Darstellung von Fig. 1 aus einer anderen Perspektive, wobei nur die Montagestellung dargestellt ist,

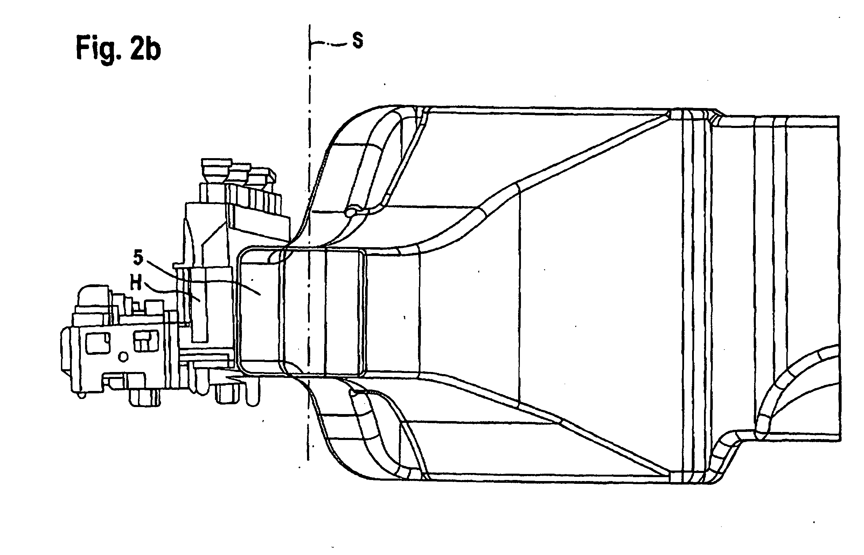

- Fig. 2b: die Darstellung von Fig. 1 aus einer anderen Perspektive, wobei nur die Betriebsstellung dargestellt ist,
- Fig. 3: eine perspektivische Detailansicht des zweiten, schwenkbaren Bereichs des Filtergehäuses von Fig. 1 mit elastischer Dichtlippe,
- Fig. 4: eine erste Variante der Abdichtung des zweiten Bereichs gegenüber dem ersten Bereich,
- Fig. 5: einen schematischen Schnitt durch eine Rastverbindung zur Sicherung der Betriebsstellung,
- Fig. 6a und 6b: eine im Bereich der Zapfen und entsprechenden Öffnung ausgebildete Klemmvorrichtung zur Sicherung der Montagestellung, die in Fig. 6b dargestellt ist,
- Fig. 6c bis 6e: eine erste Variante einer Klemmvorrichtung mit zwei Klemmstellungen,
- Fig. 6f bis 6h: eine zweite Variante einer Klemmvorrichtung mit zwei Klemmstellungen,
- Fig. 7a bis 7c: eine im Bereich der Schwenkachse ausgebildete Vorrichtung zur Sicherung der Montagestellung, wobei Fig. 7a die Montagestellung, Fig. 7b die Betriebsstellung und Fig. 7c eine überlagerte Darstellung von Betriebsstellung (Strich-PunktPunkt-Linie) und Montagestellung (durchgezogene Linie) zeigen, und
- Fig. 7d: eine Variante der Figuren 7a bis 7c mit kompaktem Schnapphaken in überlagerter Darstellung, wobei die Montagestellung durch durchgezogene Linien und die Betriebsstellung durch Strich-Punkt-Punkt-Linien dargestellt ist.

Eine im Prinzip herkömmliche Kraftfahrzeug-Klimaanlage 1 weist ein Filtergehäuse auf, im Folgenden als Gehäuse 2 bezeichnet, wobei das Filtergehäuse vorliegend im Innenraum des Kraftfahrzeugs und ein benachbart angeordnete Gebläse, das Teil des gleichen Strömungskanals ist, vor der Stirnwand des Kraftfahrzeugs im Motorraum angeordnet ist. Das als Kunststoffspritzgußteil ausgebildete Gehäuse 2 nimmt vorliegend zwei Filter 3 in sich auf.

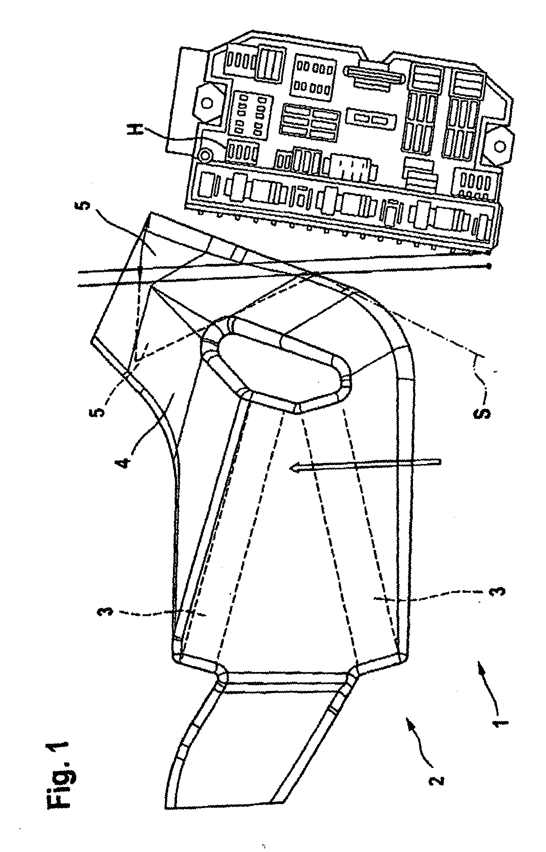

Im Einbauweg des Gehäuses 2 ist gemäß dem vorliegenden Ausführungsbeispiel ein fahrzeugfester Stromverteiler, in Fig. 1 als H bezeichnet, angeordnet. Dieser Stromverteiler H ist aus montagetechnischen Gründen vor dem Gehäuse 2 im Cockpit-Modul einzubauen, so dass es zu Hinterschneidungen kommt, wodurch die Montage des Gehäuses 2 stark erschwert oder ohne weitere Maßnahmen gar nicht möglich ist.

Um bei der Montage am fahrzeugfesten Stromverteiler H vorbei zu kommen, besteht das Gehäuse 2 aus einem ersten, größeren Bereich 4, in welchem die Filter 3 angeordnet sind, und einem gegenüber diesem ersten Bereich 4 um eine Schwenkachse S verschwenkbaren zweiten, kleineren Bereich 5, welcher einen Teil der Filteranströmung bildet.

Vorliegend ist der zweite Bereich 5 auf Grund der Luftkanalgeometrie dieses Teils des Filtergehäuses in den ersten Bereich 4 hinein verschwenkbar, wodurch ein wesentlicher Teil des zweiten Bereichs 5 in der Montagestellung innerhalb des ersten Bereichs 4 angeordnet ist. Dies ermöglicht eine vereinfachte Montage, da ansonsten entweder das Gehäuse zweiteilig ausgebildet sein müsste oder die Montageabfolge anders gewählt werden müsste, was vorliegend unerwünscht ist. In Fig. 1 ist die Einbaurichtung durch einen Pfeil angedeutet, wobei der Spielraum beim Einbau durch zwei parallele Linien verdeutlicht ist, eine durch die Schwenkachse S und die andere durch den gehäusenächsten Punkt des Stromverteilers H. Die Verschwenkbarkeit um die Schwenkachse S ist vorliegend durch eine Art Filmscharnier gebildet, wobei im Bereich der Schwenkachse S die Wandstärke verringert ist, so dass ein Schwenken möglich ist. Da das Scharnier keine Schwenk-Dauerbelastungen aushalten muss, sondern in aller Regel nur einmal in jede Schwenkrichtung betätigt wird, sind keine speziellen Maßnahmen zu treffen, außer dass das Material zumindest diese hin-und-her Verformung - sei rein elastisch oder teilweise auch plastisch - ohne zu Brechen aushalten muss. Gegebenenfalls kann im Bereich der Schwenkachse S auch eine zusätzliche elastische Abdichtung oder Verstärkung aufgebracht werden, die ein Brechen verhindert und somit die Dichtheit in Betriebsstellung sicherstellt.

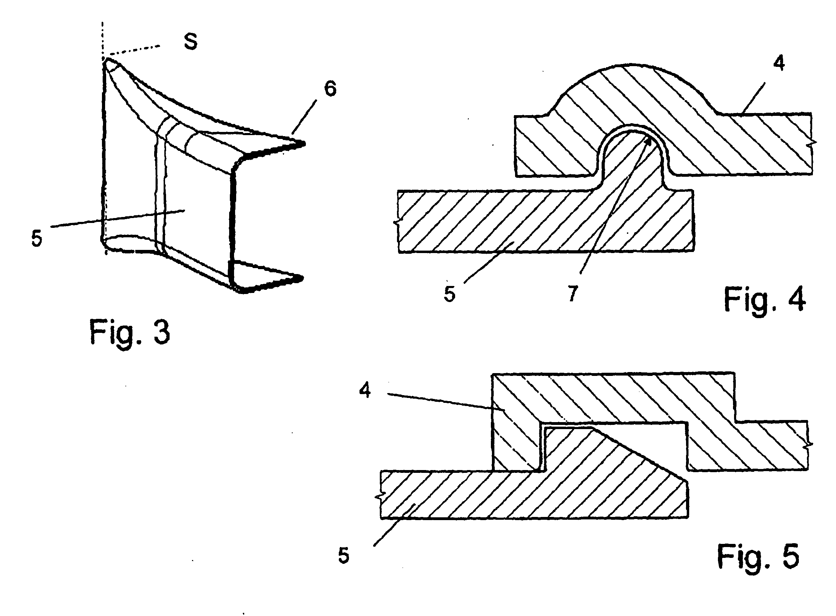

Ein weiterer Vorteil der Verschwenkbarkeit des zweiten Bereichs 5 gegenüber dem ersten Bereich 4 ist, dass bei dieser Ausgestaltung ein Teil des zweiten Bereichs 5 elastisch ausgebildet sein kann, so dass die Ränder in Betriebsstellung federnd an den entsprechenden Überschneidungsbereichen mit dem ersten Bereich 4 anliegen. Zusätzlich sind mittels Zwei-Komponenten Spritzgießens hergestellte, elastische Dichtlippen 6 (vgl. Fig. 3) an den Rändern vorgesehen, die in Anlage an den ersten Bereich 4 sind, welche eine ausreichende Dichtheit gewährleisten, wobei die Dichtfunktion durch den etwas erhöhten Innendruck im Gehäuse 2 gegenüber dem Umgebungsdruck unterstützt wird.

Nach dem Zurückklappen des schwenkbaren, zweiten Bereichs 5 des Gehäuses 2 ergibt sich eine geometrisch definierte Schnittstelle für das benachbarte Gebläse im Motorraum, wobei vorliegend die abschließende Fixierung des zweiten Bereichs 5 des Gehäuses 2 durch die Montage des Gebläses erfolgt.

Um das Gehäuse 2 in der Montagestellung zu halten, reicht vorliegend die Reibung und elastische Verformung des einschwenkenden, zweiten Bereichs 5 gegenüber dem äußeren, ersten Bereich 4 des Gehäuses 2, jedoch sind auch zusätzliche, sichernde Maßnahmen möglich, wie beispielsweise Rastverbindungen, Sicherungsstifte, welche die Montage dadurch erleichtem, dass der zweite Bereich 5 nicht während der Montage ausklappt.

Bevorzugt ist der äußere erste Bereich 4 gegenüber einem zweiten, inneren Bereich 5, unabhängig davon welcher Teil verschwenkt wird, steifer ausgeführt. Hierdurch wird zur Abdichtung der Effekt der Selbstverstärkung nutzbar. Durch den erzeugten Innendruck beim Betrieb des Gebläses wird der etwas weichere oder elastischere Bereich 5 als Innenteil gegen den steiferen oder stabileren Bereich 4 als Außenteil gedrückt, wobei die Dichtwirkung erhöht ist. Gleichzeitig erhöht sich der Innendruck mit zunehmender Leistungsanforderung des Gebläses, so dass bei maximaler Gebläseleistung auch die beste Dichtwirkung vorliegt.

Gemäß einer ersten Variante ist an Stelle des Filmscharniers ein Scharnier mit Zapfen und entsprechenden Öffnungen ausgebildet, wobei in diesem Fall die beiden Gehäusebereiche getrennt ausgebildet sind, weshalb in diesem Fall spezielle Maßnahmen für die Abdichtung in der Betriebsstellung vorzusehen sind. Dies kann beispielsweise durch eine Fertigung mit minimalen Toleranzen im Stoßbereich, eine zusätzliche elastische Dichtlippe im Bereich der Schwenkachse, ein in Betriebsstellung gequetschtes Dichtelement und/oder durch Aufbringen eines abdichtenden Elements erfolgen.

Ferner ist, wie in Fig. 4 dargestellt, in den Überschneidungsbereichen der Gehäusebereiche 4 und 5 am äußeren, ersten Bereich 4 eine Nut 7 vorgesehen, in welcher eine am inneren, zweiten Bereich 5 vorgesehene Rippe positioniert ist. Um die Dichtwirkung zu verbessern, kann die Rippe mit Übermaß aus einem elastischen Material ausgebildet sein oder in der Nut 7 ein Dichtelement vorgesehen sein, gegen welches die Rippe in der Betriebsstellung drückt. Alternativ kann die Nut auch innen, d.h. vorliegend am einschwenkenden Bereich des Gehäuses, und die Rippe außen vorgesehen sein. Ebenfalls kann an beiden Bereichen eine Nut vorgesehen sein, wobei in eine der Nuten ein entsprechend überstehendes Dichtelement eingeklebt ist, welches die Funktion der Rippe übernimmt.

Das Vorsehen einer Nut und Rippe dient neben der Abdichtung auch der Sicherstellung einer exakten Positionierung der beiden Bereiche 4 und 5 in der Betriebsstellung sowie der Sicherung dieser Position.

Zur zusätzlichen Sicherung der Bereiche 4 und 5 in der Betriebsstellung können auch Rastverbindungen vorgesehen sein, wie in Fig. 5 dargestellt, wobei diese entfernt von der Schwenkachse S angeordnet sind, jedoch in einem Bereich, der die Anbindung des Gebläses nicht behindert. Ein Element der Rastverbindung kann auch - bei entsprechender Anordnung zweier hierzu gehöriger Gegenelemente - sowohl der Sicherung in der Betriebsstellung als auch in der Montagestellung dienen.

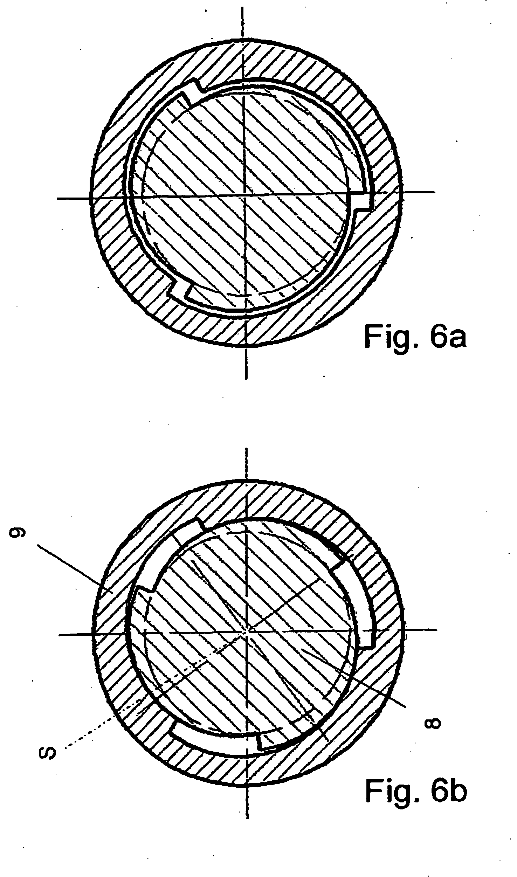

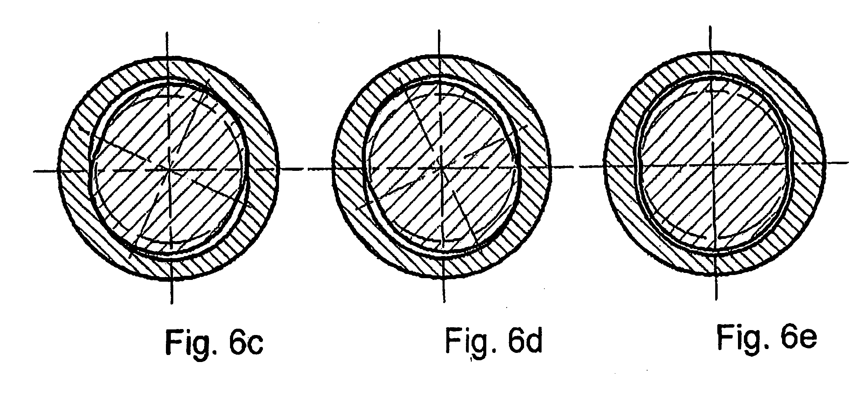

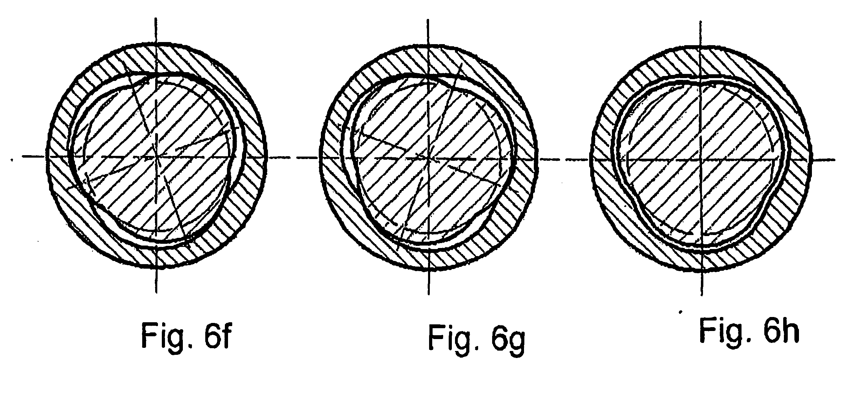

Gemäß einer weiteren Variante ist eine Klemmverbindung zur Sicherung in der Montagestellung in die Zapfen 8 und entsprechenden Öffnungen, welche die Schwenkachse S bilden, integriert (vgl. Fig. 6a, 6b). Hierbei weisen die Zapfen 8 Klemmbereiche 9 auf, die mit entsprechenden Bereichen der Öffnungen zusammenwirken, um die Zapfen 8 in der entsprechenden Stellung zu fixieren.

Gemäß einer ersten Variante der Klemmverbindung, die in den Figuren 6c bis 6e dargestellt ist, ist sowohl in der Montagestellung (Fig. 6c) als auch in der Betriebsstellung (6d) ein Klemmen vorgesehen, während in der Zwischenstellung ein relativ einfaches Schwenken möglich.

Figuren 6f bis 6h zeigen eine zweite Variante der Klemmverbindung, welche auf Grund der dreifachen, gleichmäßig verteilten Anordnung der Klemmbereiche über den Umfang eine verbesserte Zentrierung aufweist.

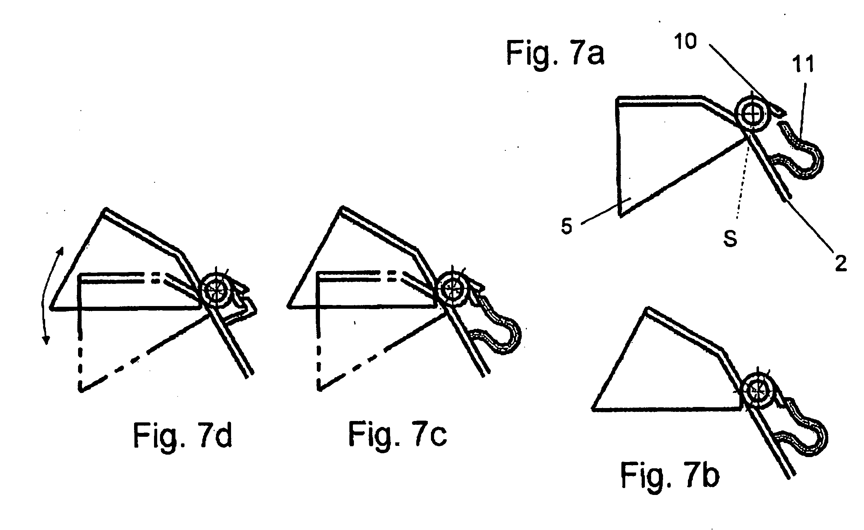

Figuren 7a bis 7c zeigt eine Variante einer Vorrichtung zur Sicherung der Montagestellung, bei der im Bereich der Schwenkachse am verschwenkbaren Bereich 5 des Gehäuses 2 ein sich nach außen, leicht in tangentialer Richtung erstreckender Vorsprung 10 vorgesehen ist, welcher in einen am anderen Bereich 4 des Gehäuses 2 ausgebildeten Schnapphaken oder Halter 11 einführbar ist, welcher einen Endanschlag bildet, und in welchem der Vorsprung 10 ausreichend sicher gehalten ist, um ein ungewolltes Rückschwenken, vorliegend aus der Montagestellung, zu verhindern. Eine entsprechende Vorrichtung kann natürlich auch vorgesehen sein, um ein zu weites Ausschwenken, d.h. über die Betriebsstellung hinaus, zu verhindern. Der Vorsprung kann zusätzlich mit einem Federhaken ausgebildet sein, welcher mit einer Hinterschneidung am Halter zusammenwirken kann, so dass eine Rastvorrichtung die entsprechende Endstellung zusätzlich sichert.

In Fig. 7d ist eine Variante dargestellt, welche einen kompakteren und weniger federnden Schnapphaken aufweist, in welchen der Vorsprung einführbar ist.

## Patentansprüche

1. Gehäuse, insbesondere Luftführungsgehäuse für eine Kraftfahrzeug-Klimaanlage, das mehrere Bereiche (4, 5) aufweist, wobei ein zweiter Bereich (5) des Gehäuses (2) gegenüber dem restlichen, ersten Bereich (4) des Gehäuses (2) um eine Schwenkachse (S) zwischen einer Montagestellung und einer Betriebsstellung verschwenkbar ausgebildet ist, **dadurch gekennzeichnet, dass** der verschwenkbare, zweite Bereich (5) des Gehäuses (2) durch eine Vorrichtung, die durch eine Rastundloder Klemmverbindung gebildet ist, in der Montagestellung fixierbar ist.

2. Gehäuse nach Anspruch 1, **dadurch gekennzeichnet, dass** in der Schwenkachse (S) eine weichere Komponente und/oder ein Filmscharnier und/oder eine Materialverjüngung vorgesehen ist.

3. Gehäuse nach Anspruch 1 oder 2, **dadurch gekennzeichnet, dass** die Schwenkachse (S) durch zwei Zapfen verläuft, die am ersten und/oder am zweiten Bereich (4 bzw. 5) ausgebildet sind, und welche in entsprechende Öffnungen eingeführt sind.

4. Gehäuse nach einem der vorhergehenden Ansprüche, **dadurch gekennzeichnet, dass** ein Index und/oder eine Clipsverbindung vorgesehen ist, so dass sicherstellbar ist, dass der erste und/oder der zweite Bereich (4 bzw. 5) nach erfolgter Montage exakt positioniert beziehungsweise in der Betriebsstellung angeordnet ist.

5. Gehäuse nach einem der vorhergehenden Ansprüche, **dadurch gekennzeichnet, dass** in Überschneidungsbereichen des ersten und zweiten Bereichs (4, 5) eine Abdichtung vorgesehen ist.

6. Gehäuse nach Anspruch 5, **dadurch gekennzeichnet, dass** die Abdichtung durch eine federnde Anlage eines Bereichs an den anderen Bereich des Gehäuses (2) undloder durch eine oder mehrere Dichtlippen (6) und/oder durch zwischen den Bereichen (4, 5) angeordnete Dichtelemente gebildet ist.

7. Gehäuse nach einem der vorhergehenden Ansprüche, **dadurch gekennzeichnet, dass** in der Schwenkachse (S) Zapfen (8) vorgesehen sind, wobei mindestens einer der Zapfen (8) Klemm- oder Rastbereiche (9) aufweiset, die mit entsprechenden Bereichen in der den Zapfen (8) aufnehmenden Öffnung zusammenwirken und die eine Fixierung des schwenkbaren Bereichs (5) in der Montagestellung und/oder Betriebsstellung bewirken.

8. Gehäuse nach einem der vorhergehenden Ansprüche, **dadurch gekennzeichnet, dass** das Gehäuse (2) aus Kunststoff Spritzgußteilen gebildet ist.

9. Kraftfahrzeug mit einer Klimaanlage, mit einem Gehäuse (2) nach einem der Ansprüche 1 bis 8, wobei der verschwenkbare Bereich des Gehäuses (2) durch ein nach dem Gehäuse (2) eingebautes Bauteil im Kraftfahrzeug fixiert ist.

10. Kraftfahrzeug nach Anspruch 9, **dadurch gekennzeichnet, dass** das fixierende Bauteil ein Gebläse ist.

## Claims

1. Housing, in particular an air duct housing for a motor vehicle air-conditioning unit, which comprises a number of zones (4, 5) such that a second zone (5) of the housing (2) is made to be able to swivel about a pivot axis (S) relative to the remaining, first zone (4) of the housing (2) between an assembly position and an operating position, **characterised in that** the swivelling second zone (5) of the housing (2) can be fixed in the assembled position by means of a device formed as a watch and/or clamp connection.

2. Housing according to Claim 1, **characterised in that** in the pivot axis (S) a soft component and/or a film hinge and/or a taper of the material is provided.

3. Housing according to Claims 1 or 2, **characterised in that** the pivot axis (S) passes through two pins which are formed on the first and/or the second zone (4 or 5 respectively) and which are inserted into corresponding openings.

4. Housing according to any of the preceding claims, **characterised in that** an index and/or clip connection is provided, to ensure that the first and/or second zone (4 or 5) is/are arranged positionally exactly in relation to the operating position after correct assembly.

5. Housing according to any of the preceding claims, **characterised in that** in the intersection areas of the first and second zone (4, 5) a seal is provided.

6. Housing according to Claim 5, **characterised in that** the seal is formed by elastic contact of one zone against the other zone of the housing (2) and/or by one or more sealing lips (6) and/or by sealing elements arranged between the zones (4, 5).

7. Housing according to any of the preceding claims, **characterised in that** in the pivot axis (S) pins (8) are provided, at least one of the said pins (8) having clamping or catch areas (9) that co-operate with corresponding areas in the openings that receive the pins (8), and which lock the swivelling zone (5) in the assembly position and/or in the operating position.

8. Housing according to any of the preceding claims, **characterised in that** the housing (2) is made as a plastic, injection moulded component.

9. Motor vehicle with an air-conditioning unit having a housing (2) according to any of Claims 1 to 8, such that the swivelling zone (5) of the housing (2) id fixed by a component built into the motor vehicle after the housing(2).

10. Motor vehicle according to Claim 9, **characterised in that** the said fixing component is a fan.

## Revendications

1. Carter, en particulier carter de ventilation pour un système de climatisation d'un véhicule automobile, qui comprend plusieurs zones (4, 5), où une deuxième zone (5) du carter (2) est configurée, par rapport à l'autre première zone (4) du carter (2), de façon à pouvoir pivoter autour d'un axe de pivotement (S), entre une position de montage et une position de fonctionnement, **caractérisé en ce que** la deuxième zone pivotante (5) du carter (2) peut être fixée, dans la position de montage, par un dispositif qui est formé par une jonction obtenue par encliquetage et / ou par serrage.

2. Carter selon la revendication 1, **caractérisé en ce qu'**il est prévu, dans l'axe de pivotement (S), un composant plus souple et / ou une charnière de film et / ou une diminution de matière.

3. Carter selon la revendication 1 ou 2, **caractérisé en ce que** l'axe de pivotement (S) passe par deux tourillons qui sont configurés sur la première et / ou sur la deuxième zone (4 ou 5) et qui sont introduits, dans des ouvertures correspondantes.

4. Carter selon l'une quelconque des revendications précédentes, **caractérisé en ce qu'**il est prévu une indexation et / ou un assemblage clipsé, de sorte qu'il peut être garanti que la première et / ou la deuxième zone (4 ou 5), après avoir effectué le montage, est positionnée de façon exacte ou bien disposée dans la position de fonctionnement.

5. Carter selon l'une quelconque des revendications précédentes, **caractérisé en ce qu'**il est prévu un joint d'étanchéité dans des zones de chevauchement de la première et de la deuxième zone (4, 5).

6. Carter selon la revendication 5, **caractérisé en ce que** le joint d'étanchéité est formé par un appui élastique d'une zone, sur l'autre zone du carter (2), et / ou par une ou plusieurs lèvres d'étanchéité (6) et / ou par des éléments d'étanchéité disposés entre les zones (4, 5).

7. Carter selon l'une quelconque des revendications précédentes, **caractérisé en ce qu'**il est prévu des tourillons (8) dans l'axe de pivotement (S), où au moins l'un des tourillons (8) présente des zones de serrage ou d'encliquetage (9) qui agissent de façon conjointe avec des zones correspondantes dans l'ouverture logeant le tourillon (8) et qui, dans la position de montage et / ou dans la position de fonctionnement, déclenchent une fixation de la zone pivotante (5).

8. Carter selon l'une quelconque des revendications précédentes, **caractérisé en ce que** le carter (2) est formé par des pièces en matière plastique moulées par injection.

9. Véhiculé automobile comprenant un système de climatisation, un carter (2) selon l'une quelconque des revendications 1 à 8, où la zone pivotante du carter (2), dans le véhicule automobile, est fixée par une pièce de structure montée en aval du carter (2).

10. Véhicule automobile selon la revendication 9, **caractérisé en ce que** la pièce de structure se fixant est un ventilateur.
